**Europäisches Patentamt**

**European Patent Office**

**Office européen des brevets**

(19)

(11) Publication number: **0 125 043**
**B1**

(12) # EUROPEAN PATENT SPECIFICATION

(45) Date of publication of patent specification: **08.07.87**

(21) Application number: **84302478.7**

(22) Date of filing: **11.04.84**

(51) Int. Cl.⁴: **H 02 H 3/093**

(54) **Static type switch disconnect circuit and power distribution system including said circuit.**

(30) Priority: **11.04.83 JP 64683/83**
**06.06.83 JP 102007/83**

(43) Date of publication of application:
**14.11.84 Bulletin 84/46**

(45) Publication of the grant of the patent:
**08.07.87 Bulletin 87/28**

(84) Designated Contracting States:
**DE FR GB IT**

(56) References cited:
**US-A-4 149 210**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Yagisawa, Mamoru**
**31-9, Makuyama 1866, Daimon, Daimon-cho**
**City of Fukuyama Hiroshima Prefecture (JP)**

(74) Representative: **Lawson, David Glynne et al**
**MARKS & CLERK 57-60 Lincoln's Inn Fields**
**London WC2A 3LS (GB)**

Courier Press, Leamington Spa, England.

## Description

This invention relates to a switch trip or disconnect device used in a circuit breaker or the like.

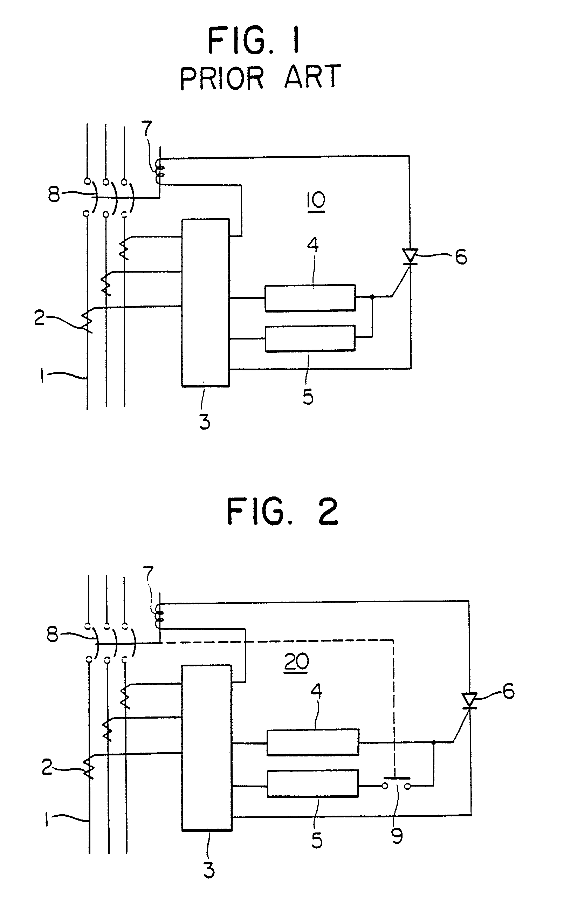

In Fig. 1, there is shown a conventional static trip or disconnect device for a circuit breaker. In this figure, 1 denotes a main circuit, 2 a current transformer for sensing the current in the main circuit 1, 3 an overcurrent sensor, 4 a timing unit, 5 a quick disconnect circuit, 6 a switching element such as a thyristor, 7 a trip coil, 8 a switch and 10 a circuit breaker made up of tripping elements 2 through 7.

The prior-art disconnect device operates as follows:

The current flowing through the main circuit 1 is sensed by current transformer 2. When an overcurrent is flowing through main circuit 1, such condition is sensed by the overcurrent sensor 3 connected to and receiving output signals from the current transformer 2. The switching element 6 is activated after lapse of a certain time set on timer 4. With current flowing through the switching circuit 6, the trip coil 7 is activated for opening the switch 8. When shorting occurs in the main circuit, the switch 8 is opened instantly in a similar manner through the quick disconnect circuit 5 for breaking the fault current.

According to the customary practice, the circuit breaker making use of the above described trip device is mounted in the main circuit or line and a plurality of branch lines are derived from said main line with each said branch line including a branch line circuit breaker similar in structure to the main line circuit breaker for providing selective activation of the main and branch line circuit breakers. However, in such case, the range of selective operation of these branch line circuit breakers is necessarily limited or subordinated to the range of instant trip operation of the main line circuit breaker. In order to eliminate such deficiency, it has been contemplated to dispense with instant tripping upon shorting and to cause the circuit breaker to open in such contingency by timed or delayed tripping. In this case, the circuit breaker can be tripped only after a longer time period than in the case of using the instant trip circuit, thereby lowering the breaking capacity.

US—A—4149210 discloses a static trip device for a switch, comprising a sensing unit for sensing line current, tripping circuits operative with a delay, an instantaneous tripping circuit, a switching element which is closed in response to an output from one of the tripping circuits, on an overcurrent in the line, and a trip coil activated on closure of the switching element, for opening the main switch. The instantaneous tripping circuit is normally operative but can be disabled by signals received from other static trip devices connected to the line, while the normal delayed tripping functions are maintained. Operation of the instantaneous tripping circuit is not coordinated with that of the main switch and the breaking capacity of the latter is reduced for the reason outlined in the preceding paragraph. The apparatus according to US—A—4 149 210 requires a special signal line between the main and branch circuit breakers, and the branch circuit breaker must be of a special construction.

An object of the present invention is to provide a static type trip or disconnector device such that the breaking capacity is improved.

According to the present invention there is provided a static type trip or disconnect device for a main switch comprising a tripping or disconnecting means, a timing circuit for actuating tripping or disconnecting means with a delay in response to an overcurrent in a main line controlled by the switch, and a quick-operating operating circuit for actuating the tripping or disconnecting means instantaneously in response to a short or similar fault in the said line, characterised in that the quick-operating circuit is normally inoperative and is rendered operative only for a predetermined time on the closure of the main switch.

In a preferred embodiment, the trip or disconnect device of this invention comprises a sensing circuit for sensing the current in the main line, the timing circuit is responsive to an output from said sensing circuit for providing a certain timing under an overcurrent condition in said main line, the quick operating circuit operates instantly responsive to an output from said sensing circuit under a short circuit condition in said main line, the tripping or disconnecting means comprise a switching element turned on responsive to the output from said timing circuit or to the output from said quick operating circuit, and a trip coil activated upon closure of said switching element for driving the main switch to open the main line, and a switch unit is connected between said quick operating circuit and said switching element and is operable responsive to a closure signal from said main switch so as to be closed for said predetermined time.

As a result of the coordination of the limited operation of the quick-operating circuit with the closure of the main switch, the selective range of the operation of the trip or disconnect device is enhanced, without lowering the breaking capacity.

Preferably, the switch unit remains activated for said predetermined time, regardless of the duration of the switch closure signal from the main switch.

Brief Description of the Drawings

Fig. 1 is a block diagram showing a circuit breaker making use of a conventional static type switch disconnect device.

Fig. 2 is a block diagram showing a circuit breaker making use of a static type switch disconnect device according to an embodiment of the present invention.

Fig. 3 is a detailed circuit diagram of the switch unit.

Fig. 4 is a diagrammatic view showing the circuit breaker making use of the switch disconnect device according to the present invention, wherein said circuit breaker is connected between the main line and a plurality of loads.

Fig. 5 is a chart showing the tripping time against main current flowing through the circuit breaker.

Reference is now made to the accompanying drawings showing a preferred embodiment of the present invention.

Fig. 2 shows an example in which the static type switch disconnect device of the present invention is applied to the circuit breaker. In Fig. 2, the parts or elements similar to those shown in Fig. 1 are indicated by the same reference numerals and the corresponding description is omitted for simplicity. In Fig. 2, 9 denotes a switch unit connected in series with a control electrode of the switching element 6 and the quick disconnect circuit 5. The switch unit 9 is closed for a certain time interval since the moment the switch 8 is turned on and otherwise remains open. Thus the quick disconnect circuit 5 is driven through switch unit 9 which is turned on for several tens or several hundreds of milliseconds since the circuit breaker 20 made up of the elements 2 through 7 and the unit 9 is turned on from its off state and which remains off otherwise.

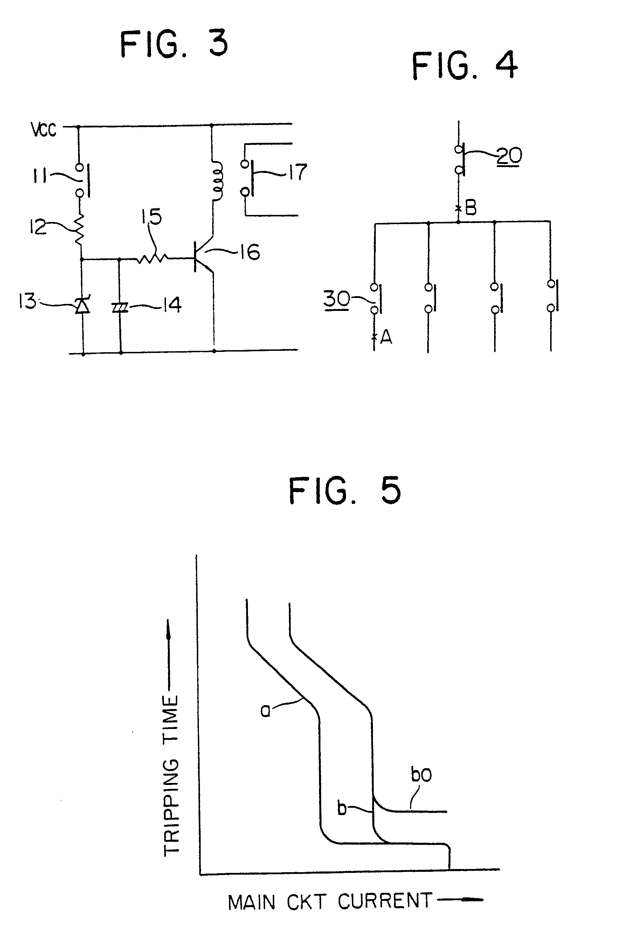

Fig. 3 is a detailed circuit diagram of the switch unit 9. In the figure, 11 denotes a signal contact from switch 8, 12 a resistor, 13 a Zener diode, 14 a capacitor, 15 a second resistor, 16 a transistor and 17 an output relay associated with an output contact.

The device shown in Fig. 3 operates as follows:

It is now assumed that the above described static disconnect device is used as main circuit breaker 20 and that a plurality of branch line circuit breakers 30 are connected in series with the main line circuit breakers.

With the main and branch line circuit breakers 20, 30 being turned on, since the switch unit 9 of the main line circuit breaker 20 is turned off, quick disconnect circuit 5 is not in operation. Thus the operating characteristics of the main line circuit breaker 20 are as shown by a curve bo in Fig. 5. On the other hand, the operating characteristics of the branch line circuit breaker 30 are as shown by a curve a in Fig. 4. Thus, when a short occurs at point A in Fig. 4, only the branch line circuit breaker is activated instantly, while the main line circuit breaker 20 is not activated instantly, hence the desired selective operation of the main and branch line circuit breakers. Furthermore, when a short or the like fault occurs at point B in Fig. 4 after the switch 8 of the main line circuit breaker 20 has been opened by the overcurrent or the like and is then reclosed, the switch unit 9 of the main line circuit breaker 20 is turned on for preset time interval, as described above. Therefore, the quick disconnect circuit 5 shown in Fig. 2 is activated for instantly disconnecting the switch 8. The operating characteristic in this case are as shown by a curve b in Fig. 5.

The operation in this case is described by the referring to Fig. 3.

When the switch 8 is closed, a signal contact 11 operating associated therewith is closed for a brief period of time. However, the resulting closure signal usually has the duration of only several milliseconds. Moreover, signal duration is changed considerably from one signal to another. It is moreover required that the closure signal for the switch unit 9 be at least several tens of milliseconds in order that the quick disconnect circuit may be activated positively. For the signal duration less than several tens of milliseconds, the quick disconnect circuit is occasionally not activated despite the switch unit 9 being closed. It is therefore required that the closure signal for the switch unit 9 be of a constant duration longer than several tens of milliseconds. Fig. 3 shows a typical circuit for providing a preset duration of the switch closure signal. The capacitor 14 is charged from a voltage source Vcc through the signal contact 11 from the switch 8 and through the resistor 8. The Zener diode 13 acts as voltage stabilizer for maintaining the capacitor charging voltage at a constant value despite changes in the voltage of the voltage source Vcc. Since the charging time constant of the capacitor-resistor circuit is selected to be sufficiently shorter than the time interval during which the switch contact 11 is closed, the capacitor 14 is always charged to a constant voltage despite certain fluctuations in the switch closing time interval.

The signal contact 11 is then opened instantly, however, since the capacitor 14 is charged to the constant voltage, transistor 16 remains on for a certain time determined by the discharge time constant of the capacitor 14 and the resistor 15. The output relay 17 remains closed during such time interval for providing the closure signal or contact signal.

In this manner, a sufficiently stable constant timing can be obtained from the output contact of the switch unit 9 despite fluctuations in the duration of the input signal supplied from the switch 8 to the signal contact 11. In the absence of the tripping device of the present invention, if the switch 8 is closed in the presence of a short circuit or similar fault, switch 8 is tripped open only after lapse of the time interval denoted by the curve bo in Fig. 5 thus allowing the shorting current to flow for a prolonged time with resulting damage to the main line circuit breaker 20. It should be noted that, when the main switch is turned on, the current is not as yet supplied to the load so that the operational selectivity is not required and the tripping can be made instantly. The output relay 17 may be replaced by a semiconductor switch if desired.

Although description has been made of the circuit breaker in the above embodiment, the present invention may also be applied to any other switch such as disconnecting switch for achieving similar results.

From the foregoing it is seen that the arrangement according to the present invention provides a static type trip or disconnect device in which a switch unit that may be closed only upon closure of a switch adapted to open or close the main line is connected between the instant tripping circuit and the control terminal of the switching element and in which a circuit is provided for causing said switch unit to be closed independently of the input signal thereto, for thereby providing for an increased range of selective circuit breaking without reducing the breaking capacity.

**Claims**

1. A static type trip or disconnect device for a main switch (8) comprising a tripping or disconnecting means (6, 7), a timing circuit (4) for actuating the tripping or disconnecting means (6, 7) with a delay in response to an overcurrent in a main line (1) controlled by the switch (8), and a quick-operating circuit (5) for actuating the tripping or disconnecting means (6, 7) instantaneously in response to a short or similar fault in the said line (1), characterised in that the quick-operating circuit (5) is normally inoperative and is rendered operative only for a predetermined time on the closure of the main switch (8).

2. The static type trip or disconnect device according to claim 1 characterised in that it comprises a sensing circuit (2, 3) for sensing the current in the main line (1), the timing circuit (4) is responsive to an output from said sensing circuit (3) for providing a certain timing under an overcurrent condition in said main line, the quick operating circuit (5) operates instantly responsive to an output from said sensing circuit (3) under a short circuit condition in said main line, the tripping or disconnecting means (6, 7) comprise a switching element (6) turned on responsive to the output from said timing circuit (4) or to the output from said quick operating circuit (5), and a trip coil (7) activated upon closure of said switching element (6) for driving the main switch (8) to open the main line, and a switch unit (9) is connected between said quick operating circuit (5) and said switching element (6) and is operable responsive to a closure signal from said main switch (8) so as to be closed for said predetermined time.

3. The static type trip or disconnect device as claimed in claim 2 characterised in that said switch unit (9) remains activated for said predetermined time independently of the duration of the closure signal from said main switch (8).

4. The static type trip system or disconnect device as claimed in claim 2 or 3 characterised in that said switch unit (9) is a semi-conductor switch.

5. An electric power distributor system comprising a main line with a main circuit breaker (20) connected to branch lines with respective branch circuit breakers (30), characterised in that the main circuit breaker (20) is provided with a static type trip or disconnect device as claimed in any of the preceding claims.

**Patentansprüche**

1. Statische Auslöse- oder Trennvorrichtung für einen Hauptschalter (8), mit einer Auslöse- oder Trenneinrichtung (6, 7), mit einer Zeitsteuerung (4) zum Betätigen der Auslöse- oder Trenneinrichtung (6, 7) mit einer Verzögerung in Abhängigkeit von einem Überstrom in einer Hauptleitung (1), die von dem Schalter (8) gesteuert wird, und mit einer schnell wirkenden Schaltung (5), um die Auslöse- oder Trenneinrichtung (6, 7) momentan in Abhängigkeit von einem Kurzschluß oder einem ähnlichen Fehler in der Leitung (1) zu betätigen, dadurch gekennzeichnet, daß die schnell wirkende Schaltung (5) normalerweise unwirksam ist und beim Schließen des Hauptschalters (8) nur für eine vorgegebene Zeit wirksam gemacht wird.

2. Statische Auslöse- oder Trennvorrichtung nach Anspruch 1, dadurch gekennzeichnet,

daß sie eine Abtastschaltung (2, 3) aufweist, um den Strom in der Hauptleitung (1) abzutasten,

daß die Zeitsteuerung (4) auf ein Ausgangssignal von der Abtastschaltung (3) anspricht, um eine bestimmte Zeitsteuerung bei einem Überstromzustand in der Hauptleitung vorzunehmen,

daß die schnell wirkende Schaltung (5) sofort in Abhängigkeit von einem Ausgangssignal von der Abtastschaltung (3) bei einem Kurzschlußzustand der Hauptleitung arbeitet,

daß die Auslöse- oder Trenneinrichtung (6, 7) ein Schaltelement (6), welches ansprechend auf das Ausgangssignal von der Zeitsteuerung (4) oder das Ausgangssignal von der schnell wirkenden Schaltung (5) eingeschaltet wird, und eine Auslösespule (7) aufweist, die beim Schließen des Schaltelementes (6) aktiviert wird, um den Hauptschalter (8) zum Öffnen der Hauptleitung zu betätigen,

und daß eine Schalteinheit (9) zwischen die schnell wirkende Schaltung (5) und das Schalt-element (6) geschaltet ist und ansprechend auf ein Schließsignal von dem Hauptschalter (8) betätigbar ist, um für die vorgegebene Zeit geschlossen zu werden.

3. Statische Auslöse- oder Trennvorrichtung nach Anspruch 2, dadurch gekennzeichnet, daß die Schalteinheit (9) unabhängig von der Dauer des Schließsignals von dem Hauptschalter (8) für die vorgegebene Zeit aktiviert bleibt.

4. Statische Auslöse- oder Trennvorrichtung nach Anspruch 2 oder 3, dadurch gekennzeichnet, daß die Schalteinheit (9) ein Halbleiterschalter ist.

5. Elektrisches Energieverteiler-System mit einer Hauptleitung mit einem Hauptschaltungsunterbrecher (20), der an Zweigleitungen mit entsprechenden Zweigschaltungsunterbrechen (30) angeschlossen ist, dadurch gekennzeichnet, daß der Hauptschaltungsunterbrecher (20) mit einer statischen Auslöse- oder Trennvorrichtung nach einem der vorhergehenden Ansprüche versehen ist.

**Revendications**

1. Dispositif de déclenchement ou de déconnexion du type statique pour un interrupteur principal (8) comprenant un moyen de déclenchement ou de déconnexion (6, 7), un circuit de temporisation (4) pour actionner le moyen de déclenchement ou de déconnexion (6, 7) à un retard en réponse à un excès de courant dans la ligne principale (1) contrôlée par l'interrupteur (8) et un circuit à fonctionnement rapide (5) pour actionner le moyen de déclenchement ou de déconnexion (6, 7) de manière instantanée en réponse à un court-circuit ou défaut semblable dans ladite ligne (1), caractérisé en ce que le circuit à fonctionnement rapide (5) est normalement inactif et est rendu actif uniquement après un temps prédéterminé à la fermeture dudit interrupteur principal (8).

2. Dispositif de déclenchement ou de déconnexion du type statique selon la revendication 1, caractérisé en ce qu'il comprend un circuit de détection (2, 3) pour détecter le courant dans la ligne principale (1), le circuit de temporisation (4) répond à une sortie dudit circuit de détection (3) pour produire une certaine temporisation jusqu'à une condition d'excès de courant dans ladite ligne principale, le circuit de fonctionnement rapide (5) fonctionne instantanément en réponse à une sortie dudit circuit de détection (3) en une condition de court-circuit dans ladite ligne principale, le moyen de déclenchement ou de déconnexion (6, 7) comprend un élément de commutation (6) mis en circuit en réponse à la sortie dudit circuit de temporisation (4) ou à la sortie dudit circuit à fonctionnement rapide (5) et une bobine de déclenchement (7) actionnée à la fermeture dudit élément de commutation (6) pour forcer ledit interrupteur principal (8) à ouvrir la ligne principale, et une unité de commutation (9) est connectée entre ledit circuit à fonctionnement rapide (5) et ledit élément de commutation (6) et fonctionne en réponse à un signal de fermeture par ledit interrupteur principal (8) afin d'être fermée pendant ledit temps prédéterminé.

3. Dispositif de déclenchement ou de déconnexion du type statique selon la revendication 2 caractérisé en ce que ladite unité de commutation (9) reste actionnée pendant ledit temps prédéterminé indépendamment de la durée du signal de fermeture dudit interrupteur principal (8).

4. Système de déclenchement du type statique ou dispositif de déconnexion selon la revendication 2 ou 3, caractérisé en ce que ladite unité de commutation (9) est un interrupteur à semiconducteur.

5. Système distributeur de courant électrique comprenant une ligne principale avec un disjoncteur principal (20) connecté à des ramifications avec des disjoncteurs respectifs de ramification (30) caractérisé en ce que le disjoncteur principal (20) est pourvu d'un dispositif de déclenchement ou de déconnexion du type statique selon l'une quelconque des revendications précédentes.

0 125 043

# FIG. I
## PRIOR ART

# FIG. 2

1

# FIG. 3

# FIG. 4

# FIG. 5